Europäisches Patentamt

European Patent Office

Office européen des brevets

(19)

(11) Publication number: **0 096 160**
**B1**

(12) **EUROPEAN PATENT SPECIFICATION**

(45) Date of publication of patent specification: **13.01.88**

(51) Int. Cl.⁴: **G 01 N 21/31**

(21) Application number: **83102154.8**

(22) Date of filing: **04.03.83**

(54) **A testing method using spectroscopic photometry with three wavelengths of light and a device for carrying out the method.**

(30) Priority: **03.06.82 JP 94011/82**

(43) Date of publication of application:
**21.12.83 Bulletin 83/51**

(45) Publication of the grant of the patent:
**13.01.88 Bulletin 88/02**

(84) Designated Contracting States:
**BE CH DE FR GB IT LI NL SE**

(56) References cited:
**DE-A-2 122 655**
**DE-A-2 343 097**
**DE-A-2 812 258**
**DE-A-2 901 361**
**DE-A-3 008 914**
**DE-B-2 132 458**
**US-A-3 902 812**

(73) Proprietor: **Eisai Co., Ltd.**
**6-10, Koishikawa 4-chome Bunkyo-ku**
**Tokyo 112 (JP)**

(72) Inventor: **Tagaya, Ryosaku**
**No. 79-1, Gedoji-cho**
**Isesaki-shi Grunma-ken (JP)**

(74) Representative: **Patentanwälte Popp, Sajda, v.**
**Bülow, Hrabal & Partner**
**Widenmayerstrasse 48 Postfach 86 06 24**
**D-8000 München 86 (DE)**

EP 0 096 160 B1

Courier Press, Leamington Spa, England.

**Description**

The present invention relates to a method of testing a transparent or semi-transparent coloured vessel containing liquid, for leaks, comprising immersing the vessel in a bath of liquid dye having a particular characteristic absorption wavelength, so that any holes etc. in the vessel will allow dye to penetrate the vessel and dye its content, removing the vessel and spectrophotometrically measuring the transmissivity of the vessel and its contents at at least two wavelengths, one of said wavelengths being said particular characteristic wavelength, the other of said wavelength being a reference which is longer than said characteristic wavelength, and taking differences of the transmissivities for judging the quality of the vessel.

The invention further relates to a device for testing a transparent or semi-transparent coloured vessel containing liquid, for leaks, comprising a light source, a light guiding and beam splitting means having optical filter means for generating from the beam passing through said vessel at least a first and a second optical signal at selected wavelength regions, comprising a particular characteristic wavelength and a reference wavelength at a longer wavelength that the characteristic wavelength, optical detector means for providing output signals representing the respective transmissivities of optical signals, and comparator means for operating on the respective output signals.

Such a method and device are described in DE—A—2 901 361. When a pinhole is brought about in a glass ampoule or a vial for a chemical liquid or a liquid of food, or when an ampoule is not perfectly hermetically sealed, a leakage or a bacillary pollution may be caused.

Accordingly, a dye bath technique such as the blue bath method is utilized, in that when an ampoule is dipped into a dense blue dye solution, for example a solution of methylene blue or other blue dye for food, and is evacuated once and then brought back to an atmosphere of normal pressure, this dense dye solution will be introduced into the ampoule through small holes, cracks or gaps of the glass wall if the ampoule is of inferior quality. An inferior ampoule is eliminated by detecting the colour of the introduced dye solution. Conventionally such ampoule containing dye solution has been found by the visual inspection of the colour of the dye solution in the ampoule. There has been a detection limit for this method. Further, it has been difficult to detect failures in case of a coloured ampoule or a coloured solution.

For measuring the light energy transmitted through the ampoule with an optical detection method, a measuring method using two-wavelength spectro-photometry is set forth in DE—A—2 901 361.

In the measuring method using two wavelength spectrophotometry, the light passing through a vessel and the contents in the vessel is received, and divided into two beams with optical cables. A standard filter is provided for one beam to filter a light of wavelength uninfluenced by the characteristic wavelength as of the dye and a target filter being provided for the other beam to filter the characteristic wavelength of the dye. The outputs from filters are detected as electric signals. These two output signals are mutually added and subtracted for obtaining the sum and the difference. In comparison with these values, the subject is judged to be good or inferior.

However, even in the measurement by two wavelength spectro-photometry, when the vessel such as an ampoule is coloured for example brown, the difference in colour of the individual ampoules causes the absorption in the wavelength for the measurement change. Therefore, even a good ampoule can be judged to be out of the judging region for a good one resulting in an inferior detection sensitivity.

Further, in case of an ampoule containing coloured liquid, the temperature change of the contents itself causes the absorption to change, affecting the result of the measurement.

DE—B—2 132 458 relates to a specific problem, namely to provide for a spectrophotometer producing spectra and being capable of producing exact results even when the absorption in the spectral regions adjacent to the wavelength in question is not exactly the same. For this purpose, the apparatus disclosed in this publication makes use of logarithmic converters and mean value calculators.

DE—A—2 122 655 refers to an absorption optical device for determining the concentration of a component in a mixed substance. According to this publication the problem is discussed how to obtain the respective concentration of a given component in the mixture. In this connection absolute values as to absorption and concentration are of interest.

The object underlying the invention is to provide for a method and a device which are capable of providing an easy and reliable test of vessels as to leaks etc. without being affected by temperature changes or other factors changing when time passes by.

The solution according to the invention is characterized in that in the method as set forth in the first paragraph of the description above a third wavelength is used as a further reference which is shorter than both of said two wavelengths, in that the transmissivities at said three wavelengths are used to calculate A according to the formula:

$$A = (a2 - a1) - \frac{\lambda2 - \lambda1}{\lambda3 - \lambda1} (a3 - a1),$$

wherein

$\lambda 2$ = particular characteristic wavelength
$\lambda 1$ = wavelength shorter than $\lambda 2$
$\lambda 3$ = wavelength longer than $\lambda 2$
a1 = transmissivity at wavelength $\lambda 1$
a2 = transmissivity at wavelength $\lambda 2$
a3 = transmissivity at wavelength $\lambda 3$

A = difference between the transmissivity a2 at wavelength $\lambda 2$ and a pseudo-transmissivity value y obtained at the intersection of a vertical line at wavelength $\lambda 2$ with a straight line connecting the transmissivities a1 and a3, on a graph of transmissivity versus wavelength obtained using said transmissivities a1, a2 and a3,
and in that the vessel is judged to be inferior when the obtained value A is smaller than a fixed standard value Z.

According to a further development of such a method the following wavelengths are used:

$$\lambda 1 = 579 \text{ nm}$$
$$\lambda 2 = 630 \text{ nm}$$
$$\lambda 3 = 720 \text{ nm.}$$

The device according to the invention is characterized in that in the device as set forth above in the second paragraph of the description the optical filter means comprise a third optical filter for generating a third optical signal having a shorter wavelength than the characteristic wavelength, in that the comparator means is arranged to calculate A in accordance with the above formula, and to use said calculated value of A to judge the quality of said vessel and comprises four comparators wherein a first comparator operates on the first and the second output signals, a second comparator operates on the first and the third output signals, a third comparator operates on the outputs of the first and the second comparators to produce an output representing A, and a forth comparator compares the output A of the third comparator with a standard value Z, wherein the output of the forth comparator generates a signal indicating a defective vessel when the output A from the third comparator is lower than said standard value Z.

According to a further development of the invention, the device is characterized in that the light guiding means comprises an array of light guides divided into a plurality of small sections corresponding to the detection limit of a foreign substance and connected to a detection device for foreign matter in the vessel, one small section thereof being extended for detection of pinholes.

According to a further feature the device according to the invention is characterized in that each of the optical detector means comprises a preamplifier and a gain amplifier, wherein the outputs of the gain amplifier are connected to the first and second comparators.

As an amber ampoule is employed for eliminating shorter wavelengths, the delicate difference in the degree of colouring causes the absorption in a shorter wavelength region to be measured incorrectly. The influence of the wavelength characteristic cannot be avoided in the conventional two wavelengths spectrophotometry as described above.

Another object is to decrease the influence of the change of absorption corresponding to the temperature of the contents when the characteristic wavelength of the ampoule itself is in the measuring wavelength region.

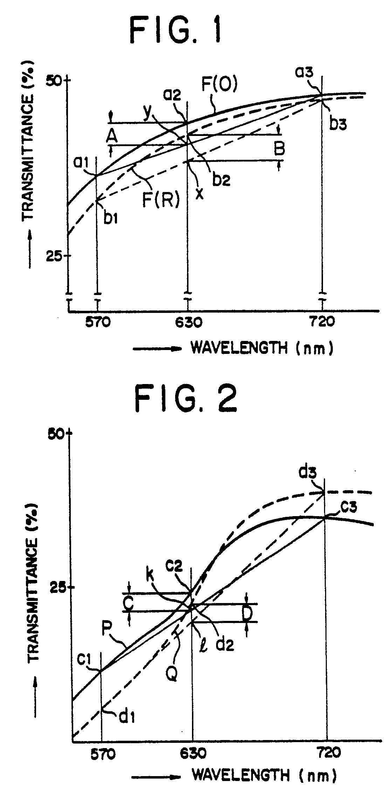

For example, as shown in Fig. 1, curves are obtained from the measurement of transmittance for an empty ampoule coloured in dense brown F(R) and an empty ampoule coloured in comparatively light brown F(O). The transmittance values of the lightly coloured empty ampoule F(O) at wavelength values of 570 nm, 630 nm and 720 nm are respectively expressed by a1, a2 and a3, and those of the densely coloured empty ampoule F(R) at the same wavelengths as for F(O) by b1, b2 and b3.

The differences between F(R) and F(O) in the vicinity of the wavelength of 550 to 600 nm and those in the vicinity of 600 to 650 nm and 700 and 750 nm are different from each other, and the gradient of a line connecting a1 and a3, at a1 is different from that of a line connecting b1 and b3 at b1. However, these curves are similar in shape. The wavelength of 630 nm is the characteristic wavelength of the dye (Food blue No. 1). The wavelength of 570 nm and that of 720 nm are the standards set for comparison.

In case of measurement using two wavelengths, if the transmittance at the wavelength of 630 nm and that at the wavelength of 720 nm are compared, the difference (a3 − a2) for the lightly coloured ampoule F(O) is smaller than the difference b3 − b2 for the densely coloured ampoule F(R). Although empty ampoules which are not affected entirely by contents are used, such differences as described are caused, which may be beyond the quality judging region making the accuracy of judgement inferior.

However, when the measurement using three wavelengths according to the present invention is employed, the measurement results are practically not affected by the colouring degree of the ampoule. Particularly, when y is the intersection of a vertical line at the wavelength of 630 nm and the straight line connecting a3 and a1, a difference (a2 − y) is expressed as A, which is the so-called depth of curve of the empty ampoule F(O). The depth of curve is a value for approximately determining the curvature of a curve. For the empty ampoule F(R), x is the intersection of a vertical line at the wavelength of 630 nm and a straight line connecting b3 and b1, being expressed as $B$. The form and the depth of curve of the empty ampoule F(O) are almost the same as those of the empty ampoule F(R), therefore $A$ is nearly equal to $B$.

Thus, the depth of curve $A$ and that of $B$ are not influenced so much by the degree of colouring of the ampoule. Therefore, when Food blue No. 1 is employed for example as a dye for a blue bath, an inferior ampoule which the dye has leaked into has its absorption increased and its transmittance decreased, and the depth of curve assumes a smaller value compared with the differences $A$ or $B$ as a fixed standard value. If the ampoule having a characteristic which is judged as an inferior one, an exact selection is performed without being affected by the gradient of curve and the absolute value of transmittance.

Fig. 2 shows the transmittance characteristic $P$ of coloured liquid contents at room temperature (18°C) and the transmittance characteristic $Q$ of the same liquid heated to 60°C. As is obvious from Fig. 2, at a high temperature the changes of the transmittance characteristics $Q$ at the longer wavelengths and the shorter wavelengths are symmetric with the characteristic wavelength 630—670 nm as a symmetric axis. However, the shape of $P$ and $Q$ is almost the same.

The measured transmittance at 18°C of the coloured liquid at the wavelengths of 570 nm, 630 nm and 720 nm are respectively expressed as C1, C2 and C3, and the same at 60°C as d1, d2 and d3. When the intersection of a straight line connecting C1 and C3, and a vertical line at the wavelength of 630 nm is $k$, the difference between C2 and $k$ is taken as $C$. Similarly, when the intersection of a straight line connecting d1 and d3, and a vertical line at the wavelength of 630 nm is $l$, the difference between d2 and $l$ is taken as $D$. The difference $C$ is almost equal to the difference $D$. Accordingly, if $C$ and $D$ are taken as the standard values, the value of transmittance of an inferior ampoule which the dye bath liquid has leaked into is lower than said standard value for easy judgement. The selection of three points in wavelength may be performed at will according to the characteristic wavelength of a dye of a dye bath, and an ampoule or the contents in an ampoule regarding the peak value of methylene blue is in the vicinity of 660 nm and the peak value of Blue No. 1 dye for food is in the vicinity of 630 nm.

Other and further objects and features of the present invention will be apparent from the following description taken in connection with the accompanying drawings, in which

Fig. 1 shows transmittance characteristic curves of a densely coloured empty ampoule and a lightly coloured empty ampoule,

Fig. 2 shows transmittance characteristic curves of a coloured content in an ampoule at room temperature (18°C) and that in a heated state (60°C),

Fig. 3 is a schematic diagram showing an embodiment of the testing device according to the present invention, and

Fig. 4 is a block diagram to illustrate a concrete embodiment of the electric circuit member of the testing device according to the present invention.

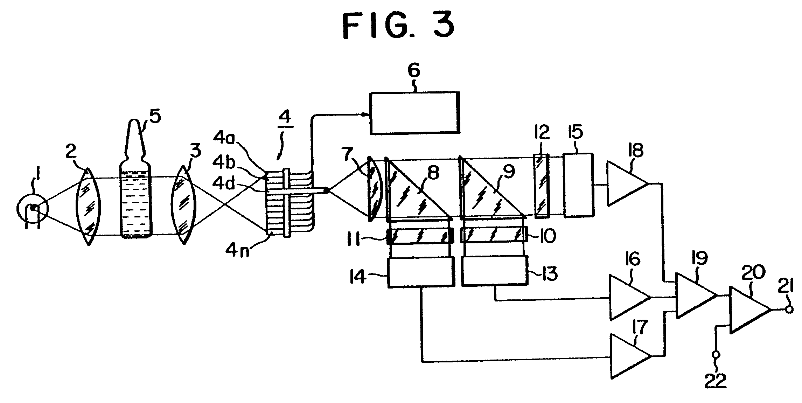

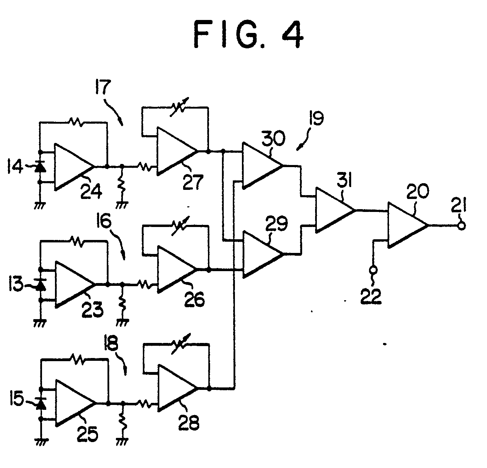

An embodiment of the testing device according to the invention will be described referring to Figures 3 and 4.

In Fig. 3, 1 is a projector lamp as a light source. For the projector lamp 1, an objective lens 2, a focussing lens 3 and light guiding means 4 are sequentially arranged. An ampoule or a vessel 5 as a subject to be tested is arranged between the objective lens 2 and focussing lens 3.

The light guiding means 4 comprises micro light receivers 4a, 4b, ... such as light guides divided into a plurality of small sections such as glassfibers corresponding to the detection limit of foreign matter or substances. The output side of respective light guides 4a, 4b, ... is connected to a detection device 6 for foreign matter in the vessel 5. A light guide 4d for example for one bit is introduced from one section of the light guides or receivers 4a, 4b, .... At the tip of the light guide 4d there are two prisms, namely a first and a second prism 8 and 9, connected through a condenser 7. The light beam passed through the condenser 7 is divided into three, one refracted by the first prism 8, one refracted by the second prism 9 after having passed through the first prism 8, and one having passed through the first and second prisms 8 and 9. A wavelength filter 10 for selecting the characteristic wavelength of the dye bath liquid is provided for the light refracted by the second prism 9. For the light refracted by the first prism 8 and the light passed through the first and second prisms 8 and 9, respective standard wavelength filters 11 and 12 are provided. The output sides of the respective wavelength filters 10, 11 and 12 are connected to a comparator 19 through photoelectric transducer elements 13, 14 and 15, respectively, and amplifiers 16, 17 and 18, respectively. The comparator 19 is connected to an output terminal 21 through a comparator 20. The other input side of the comparator 20 is connected to an input terminal 22 for inputting a standard value for judgement Z which is prescribed to correspond to said difference A = B.

A concrete circuit following the photoelectric transducer elements 13, 14 and 15 in Fig. 3 is shown in Fig. 4, in which 13, 14 and 15 as shown in Fig. 4 are photoelectric tranducer elements comprising photodiodes for example. These photoelectric transducer elements 13, 14, 15 output electric signals corresponding to the transmittance of light, the wavelengths of which are for example 630 nm, 570 nm and 720 nm. These photoelectric transducer elements 13, 14 and 15 are connected to preamplifiers 23, 24 and 25, respectively, and gain adjusting amplifiers 26, 27 and 28, respectively, comprising the amplifiers 16, 17 and 18. Of these gain amplifiers 26, 27 and 28, two gain amplifiers 26 and 27 are connected to a comparator 29, two gain amplifiers 27 and 28 are connected to a comparator 30, and these comparators 29 and 30 are further connected to a comparator 31 and to the comparator 20 through the comparator 31. The comparators 29, 30 and 31 comprise the comparator 19 in Fig. 3.

4

The manner of functioning of the device according to the present invention will be described hereinafter.

In Fig. 3 a vessel 5 as a subject to be tested is dipped into a dense blue dye solution, such as methylene blue or blue dye for food, and then subjected to a negative pressure. The dense dye solution will be introduced into the vessel 5 through some pinholes, cracks and gaps if the vessel 5 has any of these faults. The vessel 5 thus pretreated is set continuously between the objective lens 2 and the focussing lens 3 by a supply device (not shown). The vessel 5 thus set is revolved in a high speed and stopped quickly. A foreign substance, if any, mixed into the solution will float and be detected by any one of the light guides 4a, 4b, ..., and a signal obtained by detection is inputted to the foreign substance detecting device 6 to eliminate such vessels 5 which contain foreign substances.

When the vessel 5 itself has pinholes or the like and the dense dye solution is introduced into the vessel 5, the light transmitted through the vessel 5 is coloured, and the coloured light is introduced into the light guide 4d to be irradiated from the tip of it. The irradiated light made parallel by the condenser 7 passes through the first prism 8, is refracted by the second prism 9, passes through the wavelength filter 10 which selects the characteristic wavelength of the dye bath liquid, is transformed into an electric signal in the photoelectric transducer element 13, and is transmitted to the comparator group 19 through the amplifier 16. In the comparator group 19, the signals obtained in a similar way for the standard value are measured for absorption values, or transmittance values of three wavelengths for comparison. The resulting values computed from these comparisons are output as an analogue signal.

More particularly, respective output signals corresponding to the transmittance of rays at the wavelengths of 630 nm, 570 nm and 720 nm are amplified by respective preamplifiers 23, 24 and 25, respectively, having their gain adjusted by the gain adjusting amplfiers 26, 27 and 28 to be entered into the comparators 29 and 30.

Now, for obtaining the difference $A$ of the ampoule F(O) in Fig. 1, $y$ is obtained as follows:

$$y = \frac{630 - 570}{720 - 570} \cdot (a3 - a1) + a1 = \frac{6}{15}(a3 - a1) + a1 \; ;$$

therefore, the difference $A$ is

$$A = a2 - y = a2 - \left\{ \frac{6}{15} \cdot (a3 - a1; + a1 \right\} = (a2 - a1) - \frac{6}{15}(a3 - a1).$$

Based upon the formula, the comparator 30 is input with output a1 at the wavelength of 570 nm and output a3 at the wavelength of 720 nm, outputting

$$\frac{6}{15}(a3 - a1),$$

which is the difference (a3 − a1) multiplied by a constant

$$\left(\frac{6}{15}\right)$$

and gain-adjusted. The comparator 29 is input with the output a1 at the wavelength of 570 nm and the output a2 at the wavelength of 630 nm, outputting the difference a2 − a1. Then, in the comparator 31 the difference of these outputs a2 − a1 and

$$\frac{6}{15}(a3 - a1)$$

is obtained for outputting an output signal $A$, namely

$$A = (a2 - a1) - \frac{6}{15}(a3 - a1).$$

In a similar way, the difference $C$ for the characteristic curve $P$ can be obtained to be output from the comparator 31 as:

$$C = (C2 - C1) - \frac{6}{15}(C3 - C1).$$

The differences $A$ or $C$ thus obtained are compared with the judging standard value $Z$ input from the input terminal 22. When the difference $A$ or $C$ is lower than the standard $Z$, a signal that judges a vessel to be inferior is output from the comparator and a solenoid or the like (not shown) is excited for eliminating the inferior ampoule or vessel.

**Claims**

1. A method of testing a transparent or semi-transparent coloured vessel (5) containing liquid, for leaks, comprising immersing the vessel (5) in a bath of liquid dye having a particular characteristic absorption wavelength, so that any holes etc. in the vessel (5) will allow dye to penetrate the vessel (5) and dye its contents, removing the vessel (5) and spectrophotometrically measuring the transmissivity of the vessel (5) and its contents at at least two wavelengths, one ($\lambda2$) of said wavelengths being said particular characteristic wavelength, the other ($\lambda3$) of said wavelengths being a reference which is longer than said characteristic wavelength, and taking differences of the transmissivities for judging the quality of the vessel (5), characterized in that a third wavelength ($\lambda1$) is used as a further reference which is shorter than both of said two wavelengths,
in that the transmissivities at said three wavelengths are used to calculate A according to the formula:

$$A = (a2 - a1) - \frac{\lambda2 - \lambda1}{\lambda3 - \lambda1}(a3 - a1),$$

wherein

| | | |
|---|---|---|
| $\lambda2$ | = | particular characteristic wavelength |
| $\lambda1$ | = | wavelength shorter than $\lambda2$ |
| $\lambda3$ | = | wavelength longer than $\lambda2$ |
| a1 | = | transmissivity at wavelength $\lambda1$ |
| a2 | = | transmissivity at wavelength $\lambda2$ |
| a3 | = | transmissivity at wavelength $\lambda3$ |

A = difference between the transmissivity a2 at wavelength $\lambda2$ and a pseudo-transmissivity value y obtained at the intersection of a vertical line at wavelength $\lambda2$ with a straight line connecting the transmissivities a1 and a3, on a graph of transmissivity versus wavelength obtained using said transmissivities a1, a2 and a3,
and in that the vessel (5) is judged to be inferior when the obtained value A is smaller than a fixed standard value Z.

2. The method according to claim 1, characterized in that the following wavelengths are used:

$$\lambda1 = 570 \text{ nm}$$
$$\lambda2 = 630 \text{ nm}$$
$$\lambda3 = 720 \text{ nm}.$$

3. A device for testing a transparent or semi-transparent coloured vessel (5) containing liquid, for leaks, according to the method of claim 1, comprising a light source (1), a light guiding and beam splitting means (4, 8, 9) having optical filter means (10—12) for generating from the beam passing through said vessel (5) at least a first and a second optical signal at selected wavelength regions, comprising a particular characteristic wavelength and a reference wavelength at a longer wavelength than the characteristic wavelength, optical detector means (13—18) for providing output signals representing the respective transmissivities of optical signals, and comparator means (19, 20) for operating on the respective output signals, characterized in that the optical filter means (10—12) comprise a third optical filter (12) for generating a third optical signal having a shorter wavelength than the characteristic wavelength, in that the comparator means (19, 20) is arranged to calculate A in accordance with the formula in claim 1, and to use said calculated value of A to judge the quality of said vessel (5) and comprises four comparators (29, 30, 31, 20), wherein a first comparator (29) operates on the first and the second output signals, a second comparator (30) operates on the first and the third output signals, a third comparator (31) operates on the outputs of the first (29) and the second comparators (30) to produce an output representing A, and a fourth comparator (20) compares the output A of the third comparator (31) with a standard value Z, wherein the output (21) of the fourth comparator (20) generates a signal indicating a defective vessel (5) when the output A from the third comparator (31) is lower than said standard value Z.

4. The device according to claim 3, characterized in that the light guiding means (4) comprises an array of light guides (4a—4n) divided into a plurality of small sections corresponding to the detection limit of a

# 0 096 160

foreign substance and connected to a detection device for foreign matter in the vessel (5), one small section (4d) thereof being extended for detection of pinholes.

5. The device according to claim 3 or 4, characterized in that each of the optical detector means (13—18) comprises a preamplifier (23—25) and a gain amplifier (26—28), wherein the outputs of the gain amplifier (26—28) are connected to the first and second comparators (29, 30).

## Patentansprüche

1. Verfahren zum Prüfen eines transparenten oder halb-transparenten farbigen Gefäßes (5), das Flüssigkeit enthält, auf Lecks, umfassend das Eintauchen des Gefäßes (5) in ein Bad aus flüssigem Farbstoff, der eine bestimmte charakateristische Absorptionswellenlänge besitzt, so daß etwaige Löcher usw. in dem Gefäß (5) es dem Farbstoff ermöglichen, in das Gefäß (5) einzudringen und seinen Inhalt zu färben, das Herausnehmen des Gefäßes (5) und das spektrofotometrische Messen der spezifischen Druchlässigkeit des Gefäßes (5) und seines Inhalts bei mindestens zwei Wellenlängen, wobei die eine ($\lambda2$) der Wellenlängen die bestimmte charakteristische Wellenlänge ist und die andere ($\lambda3$) der Wellenlängen eine Referenz-Wellenlänge ist, die länger ist als die charakteristische Wellenlänge, und das Aufnehmen von Differenzen der spezifischen Durchlässigkeiten zur Beurteilung der Qualität des Gefäßes (5), dadurch gekennzeichnet,

daß eine dritte Wellenlänge ($\lambda1$) als weitere Referenz-Wellenlänge verwendet wird, die kürzer ist als die beiden anderen Wellenlängen,

daß die spezifischen Durchlässigkeiten bei den drei Wellenlängen verwendet werden, um einen Wert $A$ gemäß der nachstehenden Formel zu berechnen:

$$A = (a2 - a1) - \frac{\lambda2 - \lambda1}{\lambda3 - \lambda1} (a3 - a1),$$

wobei

$\lambda2$ = bestimmte charakateristische Wellenlängen
$\lambda1$ = Wellenlänge kürzer als $\lambda2$
$\lambda3$ = Wellenlänge länger als $\lambda2$
$a1$ = spezifische Durchlässigkeit bei der Wellenlänge $\lambda1$
$a2$ = spezifische Durchlässigkeit bei der Wellenlänge $\lambda2$
$a3$ = spezifische Durchlässigkeit bei der Wellenlänge $\lambda3$

$A$ = Differenz zwischen der spezifischen Durchlässigkeit $a2$ bei der Wellenlänge $\lambda2$ und einem pseudo-spezifischen Durchlässigkeitswert y, der erhalten wird bei dem Schnittpunkt einer vertikalen Linie bei der Wellenlange $\lambda2$ mit einer geraden Linie, welche die spezifischen Durchlässigkeiten $a1$ und $a3$ verbindet, in einem Graphen der spezifischen Durchlässigkeit gegenüber der Wellenlänge, der unter Verwendung der spezifischen Durchlässigkeiten $a1$, $a2$ und $a3$ erhalten wird, und daß das Gefäß (5) als minderwertig beurteilt wird, wenn der erhaltene Wert $A$ kleiner ist als ein fester Standardwert $Z$.

2. Verfahren nach Anspruch 1, dadurch gekennzeichnet, daß die folgenden Wellenlängen verwendet werden:

$$\lambda1 = 570 \text{ nm}$$
$$\lambda2 = 630 \text{ nm}$$
$$\lambda3 = 720 \text{ nm.}$$

3. Vorrichtung zum Prüfen eines tranparenten oder halbtransparenten farbigen Gefäßes (5), das Flüssigkeit enthält, auf Lecks, nach dem Verfahren gemäß Anspruch 1, umfassend eine Lichtquelle (1), eine Lichtleiter- und -strahlteilereinrichtung (4, 8, 9) mit einer optischen Filtereinrichtung (10—12), um aus dem durch das Gefäß (5) hindurchgehenden Strahl mindestens ein erstes und ein zweites optisches Signal in ausgewählten Wellenlängenbereichen zu erzeugen, die eine bestimmte charakteristische Wellenlänge und eine Referenz-Wellenlänge bei einer längeren Wellenlänge als der charakteristischen Wellenlänge umfassen, eine optische Abtasteinrichtung (13—18) zur Lieferung von Ausgangssignalen, welche die jeweiligen spezifischen Durchlässigkeiten der optischen Signale repräsentieren, und eine Vergleichseinrichtung (19, 20) zur Verarbeitung der jeweiligen Ausgangssignale, dadurch gekennzeichnet, daß die optische Filtereinrichtung (10—12) ein drittes optisches Filter (12) aufweist, um ein drittes optisches Signal mit einer kürzeren Wellenlänge als die charakteristische Wellenlänge zu erzeugen, und daß die Vergleichseinrichtung (19, 20) ausgelegt ist, um den Wert von $A$ gemäß der Formel in Anspruch 1 zu berechnen und den berechneten Wert von $A$ zu verwenden, um die Qualität des Gefäßes (5) zu beurteilen, und vier Komparatoren (29, 30, 31, 20) aufweist, wobei ein erster Komparator (29) die ersten und die zweiten Ausgangssignale verarbeitet, ein zweiter Komparator (30) die ersten und die dritten Ausgangssignale des ersten (29) und des zweiten Komparators (30) verarbeitet, um ein Ausgangssignal zu erzeugen, das den

7

Wert A repräsentiert, und ein vierter Komparator (20) das Ausgangssignal A des dritten Komparators (31) mit einem Standardwert Z vergleicht, wobei das Ausgangssignal (21) des vierten Komparators (20) ein Signal erzeugt, das ein fehlerhaftes Gefäß (5) anzeigt, wenn das Ausgangssignal A vom dritten Komparator (31) niedriger ist als der Standardwert Z.

4. Vorrichtung nach Anspruch 3, dadurch gekennzeichnet, daß die Lichtleitereinrichtung (4) eine Anordnung von Lichtleitern (4a—4n) aufweist, die in eine Vielzahl von kleinen Abschnitten unterteilt sind, die dem Abtastgrenzwert für Fremdkörper entsprechen und die an eine Abtasteinrichtung für Fremdkörper in dem Gefäß (5) angeschlossen sind, wobei ein kleiner Abschnitt (4d) von ihnen zur Abtastung von feinen Löchern herausgeführt ist.

5. Vorrichtung nach Anspruch 3 oder 4, dadurch gekennzeichnet, daß jede der optischen Abtasteinrichtungen (13—18) einen Vorverstärker (23—25) und einen Leistungsverstärker (26—28) aufweist, wobei die Ausgänge der Leistungsverstärker (26—28) an die ersten und zweiten Komparatoren (29, 30) angeschlossen sind.

## Revendications

1. Procédé pour contrôler les fuites éventuelles d'un récipient coloré transparent ou semi-transparent (5) contenant un liquide, consistant à plonger le récipient (5) dans un bain de colorant liquide ayant une longueur d'onde d'absorption caractéristique particulière, de façon que tout trou, etc. dans le récipient (5) laisse le colorant pénétrer dans le récipient (5) et colorer son contenu, à retirer le récipient (5) et à mesurer par spectro-photométrie la transmittivité du récipient (5) et de son contenu pou au moins deux longueurs d'onde, l'une ($\lambda 2$) étant la longueur d'onde caractéristique particulière, l'autre ($\lambda 3$) étant une référence plus longue que la longueur d'onde caractéristique, et à déterminer les différences de transmittivité pour juger la qualité du récipient (5), caractérisé en ce qu'on utilise une troisième longueur d'onde ($\lambda 1$) comme autre référence, $\lambda 1$ étant plus coute que les deux longueurs d'onde précitées, en ce que les transmittivités pour les trois longueurs d'onde sont utilisées pour calculer A selon la formule:

$$A = (a2 - a1) - \frac{\lambda 2 - \lambda 1}{\lambda 3 - \lambda 1} (a3 - a1),$$

dans laquelle

$\lambda 2$ = longueur d'onde caractéristique particulière,
$\lambda 1$ = longueur d'onde plus courte que $\lambda 2$
$\lambda 3$ = longueur d'onde plus longue que $\lambda 2$
a1 = transmittivité pour la longueur d'onde $\lambda 1$
a2 = transmittivité pour la longueur d'onde $\lambda 2$
a3 = transmittivité pour la longueur d'onde $\lambda 3$

A = différence entre la transmittivité a2 pour la longueur d'onde $\lambda 2$ et une valeur de pseudo-transmittivité y obtenue à l'intersection d'une ligne verticale pour la longueur d'onde $\lambda 2$ avec une ligne droite reliant les transmittivités a1 et a3 sur un graphique de transmittivités en fonction de la longueur d'onde obtenue en utilisant les transmittivités a1, a2 et a3, et en ce que le récipient (5) est jugé de mauvaise qualité lorsque la valeur obtenue A est plus petite qu'une valeur standard fixée Z.

2. Procédé selon la revendication 1, caractérisé en ce qu'on utilise les longueurs d'onde suivantes:

$\lambda 1$ = 570 nm
$\lambda 2$ = 630 nm
$\lambda 3$ = 720 nm.

3. Dispositif pour contrôler les fuites éventuelles d'un récipient coloré transparent ou semi-transparent (5) contenant un liquide, selon le procédé de la revendication 1, comprenant une source lumineuse (1), des moyens de guidage de la lumière et de dédoublement des faisceaux (4, 8, 9) ayant des moyens de filtres optiques (10—12), pour produire, à partir du faisceau travesant le récipient (5), au moins un premier signal optique et un deuxième signal optique pour des bandes de longueurs d'onde sélectionnées, comprenant une longueur d'onde charactéristique particulière et une longueur d'onde de référence plus longue que la longueur d'onde caractéristique, des moyens de détection optiques (13—18) pour fournir des signaux de sortie représentant les transmittivités respectives des signaux optiques, et des moyens de comparaison (19, 20) pour travailler sur les signaux de sortie respectifs, caractérisé en ce que les moyens de filtres optiques (10—12) comprennent un troisième filtre optique (12) pour produire un troisième signal optique ayant une longueur d'onde plus courte que la longueur d'onde caractéristique, et en ce que les moyens de comparaison (19, 20) sont conçus pour calculer A selon la formule de la revendication 1 et pour utiliser la valeur calculée de A pour juger la qualité du récipient (5) et qu'ils comportent quatre comparateurs (29, 30, 31, 20), un premier comparateur (29) travaillant sur le premier et sur le deuxième signal de sortie, un

**0 096 160**

deuxième comparateur (30) travaillant sur le premier et sur le troisième signal de sortie, un troisième comparateur (31) travaillant sur les sorties du premier comparateur (29) et du deuxième comparateur (30) pour produire une sortie représentant A, et un quatrième comparateur (20) comparant la sortie A du troisième comparateur (31) à une valeur standard (Z), la sortie (21) du quatrième comparateur (20) produisant un signal indiquant un récipient défectueux (5) lorsque la sortie A du troisième comparateur (31) est inférieure à la valeur standard (Z).

4. Dispositif selon la revendication 3, caractérisé en ce que les moyens de guidage de la lumière (4) comportent un jeu de guides de lumière (4a—4n) divisés en une multiplicité de petites sections correspondant à la limite de détection d'une substance étrangère et reliés à un dispositif de détection de la matière étrangère dans le récipient (5), une petite section (4d) de ce jeu étant prolongée pour détecter les piqûres.

5. Dispositif selon la revendication 3 ou la revendication 4, caractérisé en ce que chacun des moyens de détection optiques (13—18) comprend un préamplificateur (23—25) et un amplificateur de gain (26—28) dont les sorties sont reliées au premier comparateur (29) et au deuxième comparateur (30).

9

# FIG. 1

# FIG. 2

FIG. 3

FIG. 4